# EUROPÄISCHE PATENTSCHRIFT

(11) **EP 2 027 560 B1**
(45) Veröffentlichungstag und Bekanntmachung des Hinweises auf die Patenterteilung: **28.11.2012**
(21) Anmeldenummer: 07729001.3
(22) Anmeldetag: 11.05.2007
(51) Int. Cl.: G06K 17/00

(54) **VERFAHREN UND VORRICHTUNG ZUM PERSONALISIEREN EINER VIELZAHL VON SICHERHEITSDOKUMENTEN**
METHOD AND DEVICE FOR PERSONALIZING A MULTIPLICITY OF SECURITY DOCUMENTS
PROCÉDÉ ET DISPOSITIF POUR LA PERSONNALISATION D'UN GRAND NOMBRE DE DOCUMENTS DE SECURITÉ

(30) Priorität: 19.05.2006 DE 102006023917
(43) Veröffentlichungstag der Anmeldung: 25.02.2009
(73) Patentinhaber: Mühlbauer AG, 93426 Roding (DE)
(72) Erfinder: KIRSCHBAUER, Josef, 93476 Blaibach (DE); KAMP, Gunnar, 85435 Erding (DE); SCHWARZMEIER, Axel, 95100 Selb (DE)
(74) Vertreter: Schmidt, Steffen
(86) Internationale Anmeldenummer: PCT/EP2007/054549
(87) Internationale Veröffentlichungsnummer: WO 2007/134980

(56) Entgegenhaltungen:
- EP-A2- 0 863 482

## Beschreibung

Die Erfindung betrifft ein Verfahren zum Personalisieren einer Vielzahl von Sicherheitsdokumenten oder Smartkarten innerhalb einer Personalisierungsanlage, die eine Mehrzahl von entlang einer Längsachse der Personalisierungsanlage hintereinander angeordneten Bearbeitungsstationen zur Durchführung einzelner Personalisierungsschritte umfasst, sowie eine derartige Personalisierungsanlage gemäß den Oberbegriffen der Patentansprüche 1 und 7.

Bisher sind Personalisierungsanlagen zum Durchführen eines Verfahrens zum Personalisieren einer Vielzahl von Sicherheitsdokumenten oder Smartkarten bekannt, siehe zum Beispiel EP 0 863 482 A2, in welchen Bearbeitungsstationen zur Durchführung einzelner Personalisierungsschritte an dem sie durchlaufenden Sicherheitsdokument, wie beispielsweise einen Reisepass, derart hintereinander angeordnet sind, dass sie einem gemeinsamen Haupttransportband zugeordnet sind. Derartige Bearbeitungsstationen, auch Bearbeitungsmodule genannt, sind entlang des Haupttransportbandes derart ausgerichtet, dass ein Sicherheitsdokument jede Bearbeitungsstation während des Bearbeitungsvorganges in Richtung der Verlaufsrichtung des Haupttransportbandes durchläuft, also die Bearbeitungsstation ober- oder unterhalb des Haupttransportbandes angeordnet ist. Die sukzessiv hintereinander angeordneten Sicherheitsdokumente durchlaufen somit die einzelnen Bearbeitungsstationen nacheinander und erfahren unterschiedlich lang durchzuführende Personalisierungsvorgänge, wie beispielsweise das Bedrucken der Oberfläche, eine Laserbehandlung der Oberfläche zur Schaffung eines Hologramms oder einen Umblättervorgang. Demzufolge richtet sich die Bearbeitungsgeschwindigkeit der Personalisierungsanlage insgesamt nach dem Personalisierungsvorgang der Bearbeitungsstation mit der größten Bearbeitungszeit, sodass hierauf die Abläufe der gesamten Personalisierungsanlage abzustimmen sind. Als Ergebnis weist die Personalisierungsanlage einen im Vergleich zu den Bearbeitungszeiten der schneller arbeitenden Bearbeitungsstationen geringer möglichen Durchsatz auf.

Um ein solches Aufstauen der Sicherheitsdokumente, welches stattfinden würde, wenn die Sicherheitsdokumente in den der langsamen Bearbeitungsstation vorausgehenden schnellen Bearbeitungsstationen entsprechend den niedrigen Bearbeitungszeiten fortlaufend zeitoptimiert im Bezug auf die schnellen Bearbeitungszeiten bearbeitet werden würden, zu vermeiden, werden langsamer arbeitende Bearbeitungsstationen entlang des Transportbandes mehrfach angeordnet, um zeitgleiche Bearbeitungen mehrerer Sicherheitsdokumente zu ermöglichen. Dies kann beispielsweise dadurch realisiert werden, dass bei Laserbearbeitungsstationen die Sicherheitsdokumente bzw. Karten seitlich von dem Haupttransportband zu einzelnen nebeneinander angeordneten Laserbearbeitungsstationen weg- und zugeführt werden, sodass eine Verteilung der sich sonst aufstauenden Sicherheitsdokumente auf verschiedene Laserbearbeitungsstationen stattfinden kann. Dies erfordert jedoch einen hohen Aufwand an zusätzlichen technischen Einrichtungen, nämlich zum einen für Bänder und Transportelemente für den Seitentransport und zum anderen für die Mehrfachanordnung von Laserbearbeitungsstationen.

Demzufolge liegt der vorliegenden Erfindung die Aufgabe zugrunde, ein Verfahren zum Personalisieren einer Vielzahl von Sicherheitsdokumenten, werthaltigen Dokumenten oder Smartkarten sowie eine Personalisierungsanlage zur Verfügung zu stellen, bei dem/der eine schnelle, einfache und kostengünstige Personalisierung der Dokumente bzw. Smartkarten möglich ist.

Die Aufgabe wird verfahrensseitig durch die Merkmale des Patentanspruches 1 und vorrichtungsseitig durch die Merkmale des Patentanspruches 7 gelöst.

Ein wesentlicher Punkt der Erfindung liegt darin, dass bei einem Verfahren zum Personalisieren einer Vielzahl von Sicherheitsdokumenten, werthaltigen Dokumenten oder Smartkarten innerhalb einer Personalisierungsanlage, die eine Mehrzahl von entlang einer Längsachse der Personalisierungsanlage hintereinander angeordneten Bearbeitungsstationen zur Durchführung einzelner Personalisierungsschritte umfasst, die Dokumente bzw. Smartkarten zur Durchführung der Personalisierungsschritte, die eine Bearbeitungsstation in einer quer zur Längsachse verlaufenden ersten Richtung und die weitere Bearbeitungsstation in einer ebenso quer zur Längsachse verlaufenden, zur ersten Richtung entgegengesetzten zweiten Richtung durchlaufen, wobei sämtliche Bearbeitungsstationen hinsichtlich ihrer Durchlaufrichtungen quer zur Längsachse ausgerichtet sind. Die Dokumente bzw. Smartkarten werden somit mittels in Längsrichtung der Personalisierungsanlage bewegbarer Transportelemente von einem Ausgabebereich der einen Bearbeitungsstation zu einem Eingabebereich der anderen Bearbeitungsstation transportiert. D. h., die Dokumente bzw. Smartkarten durchlaufen die erste Bearbeitungsstation in der ersten Durchlaufrichtung und die zweite Bearbeitungsstation in der zweiten Durchlaufrichtung, die dritte wiederum in der ersten Durchlaufrichtung und die vierte wieder in der zweiten Durchlaufrichtung. Hierfür können einzelne Bearbeitungsstationen von dem das Dokument oder die Smartkarte transportierenden Transportelement ausgelassen werden, um bestimmte ausgewählte Bearbeitungsstationen, die in ihrer Gesamtheit sämtliche Personalisierungsschritte, welche für eine bestimmte Karte oder ein bestimmtes Sicherheitsdokument erforderlich sind, durchzuführen. Hierbei können auch mehrere gleichartig ausgebildete Bearbeitungsstationen hintereinander angeordnet sein, um so eine Verteilung der Dokumente bzw. Smartkarten auf mehrere Bearbeitungsstationen, die einen Bearbeitungsschritt bzw. einen Personalisierungsschritt mit hohem Zeitaufwand durchführen, zu ermöglichen. Durch eine derartige Anordnung der Bearbeitungsstationen mit einer derartigen Durchlaufrichtung wird vorteilhaft erreicht, dass die Dokumente bzw. Smartkarten innerhalb der Bearbeitungsstationen simultan, also gleichzeitig, bearbeitet werden können, wodurch sich eine Zeitersparnis bei der Bearbeitung der Dokumente bzw. Smartkarten und somit ein höherer Durchsatz der gesamten Personalisierungsanlage ergibt.

Jede Bearbeitungsstation kann beliebig oft und in einem vorprogrammierbaren und auswählbaren sowie veränderbaren Produktionsablauf in beliebiger Abfolge von den Transportelementen angefahren werden, um die Dokumente bzw. Smartkarten einzugeben und nach der Bearbeitung wieder aus der Ausgabe herauszunehmen und abzutransportieren.

Durch die Anordnung der Bearbeitungsstationen in dieser Weise mit einem links- und rechtsseitig ausgebildeten Shuttle-System, welches die Transportelemente darstellt, wird nicht nur eine schnelle Bearbeitung, sondern auch ein einfacher und kostengünstiger Aufbau der Personalisierungsanlage erhalten, ohne dass hierfür ein - wie bisher - zeitaufwendiger seitlicher Abtransport der Dokumente bzw. Smartkarten von einem Haupttransportband für die Zuführung zu einzelnen nebeneinander angeordneten Bearbeitungsstationen erforderlich ist.

Die Anordnung der Bearbeitungsstationen kann in ihrer Reihenfolge beliebig gestaltet werden und ist vorzugsweise variabel ausgebildet, sodass die als Module ausgebildeten Bearbeitungsstationen je nach Anforderung bezüglich der durchzuführenden Personalisierungsschritte ausgewechselt oder weggelassen werden können. Dies ermöglicht die Verwendung eines gemeinsamen Tischgestells für die Personalisierungsanlage, auch wenn nicht sämtliche Bearbeitungsstationsplätze innerhalb dieses Gestells belegt sind.

Derartige Verfahren und Personalisierungsanlagen sind auf Sicherheitsdokumente, wie Passbücher und jede Art von werthaltigen Karten des ID1-, 1D2- oder 1D3-Format anwendbar.

Die in jeder Bearbeitungsstation außerhalb des eigentlichen Bearbeitungsbereiches angeordneten Eingabe- und Ausgabebereiche können unabhängig von dem momentan stattfindenden Bearbeitungsvorgang von Sicherheitsdokumenten bzw. Smartkarten belegt sein. Hierfür weisen die Eingabe- und Ausgabebereiche Eingabe- und Ausgabeablageelemente zum Ablegen der Dokumente bzw. Smartkarten auf. Deren Funktion ist als unabhängig von dem eigentlichen Bearbeitungsbereich der Bearbeitungsstation zu betrachten und ermöglicht eine zeitliche Entkopplung von Vorgängen an mehreren Sicherheitsdokumenten bzw. Smartkarten innerhalb einer Bearbeitungsstation. Die Eingabe- und Ausgabeablageelemente können auch als zeitliche Pufferelemente betrachtet werden, um im Eingabebereich auf das Freiwerden des Bearbeitungsbereiches oder im Ausgabebereich auf das Abholen durch das Transportelement bzw. den Shuttle zu warten.

Durch das freiwählbare Anfahren und Bestimmen der Abfolge der anzufahrenden Bearbeitungsstationen innerhalb des Produktionsablaufes der gesamten Personalisierungsanlage mittels einer Steuereinheit findet eine weitestgehend zeitliche Entkoppelung des gesamten Produktionsablaufes innerhalb der Personalisierungsanlage und der einzelnen Bearbeitungsschritte innerhalb der Bearbeitungsstationen statt. Dies ermöglicht, dass sich die Gesamtbearbeitungszeit der Dokumente bzw. Karten nicht mehr nach der Bearbeitungszeit des am langsamsten arbeitenden Bearbeitungsmoduls richtet. Hierdurch lässt sich ein erhöhter Durchsatz der die Dokumente bzw. Smartkarten personalisierenden Personalisierungsanlage erreichen.

In der Personalisierungsanlage zum Personalisieren der Vielzahl von Sicherheitsdokumenten oder Smartkarten mit einer Mehrzahl von entlang ihrer Längsachse hintereinander angeordneten Bearbeitungsstationen, mit welchen einzelne Personalisierungsschritte an den Sicherheitsdokumenten bzw. Smartkarten durchführbar sind, und in der jede Bearbeitungsstation hinsichtlich ihrer Durchlaufrichtungen für die Sicherheitsdokumente bzw. Smartkarten quer zur Längsachse ausgerichtet sind, sind erste Enden der Bearbeitungsstationen mittels eines ersten parallel zur Längsachse bewegbaren Transportelementes und zweite Enden der Bearbeitungsstation mittels eines zweiten parallel zur Längsachse bewegbaren Transportelementes verbunden. Hierbei handelt es sich um verschiebbare Ablageelemente, die folglich den Eingabe- und Ausgabebereichen der einzelnen Bearbeitungsstationen zugeordnet sind und die diese miteinander außerhalb der Bearbeitungsstationen verbinden.

Die Sicherheitsdokumente, werthaltigen Dokumente oder Smartkarten können alternativ auch von dem Shuttle direkt in die Bearbeitungsstation hineingeschoben werden und während einer Einschiebeposition bereits erste Bearbeitungsvorgänge erfahren. Dies kann selbstverständlich ebenso in umgekehrter Richtung, also auch beim Übergang von der Bearbeitungsstation zu dem Shuttle in dieser Weise erfolgen. Eingabe- und Ausgabebereiche sind nicht zwingend erforderlich.

Die als Shuttles ausgebildeten Ablageelemente verlaufen vorzugsweise auf einem Schienensystem, welches sich beidseitig der Bearbeitungsstationen parallel zur Längsachse erstreckt, wobei ein Eingabebereich einer Bearbeitungsstation ebenso als Ausgabebereich dienen kann und sich im Normalfall Eingabe- und Ausgabebereiche entlang eines der bewegbaren Shuttles, also zu einer Seite der Bearbeitungsstationen hin, von Station zu Station in ihrer Abfolge abwechseln.

Weitere vorteilhafte Ausführungsformen ergeben sich aus den Unteransprüchen.

Vorteile und Zweckmäßigkeiten sind der nachfolgenden Beschreibung in Verbindung mit den Figuren zu entnehmen. Hierbei zeigen:
- Fig. 1: in einer schematischen Darstellung einen in einer Personalisierungsanlage stattfindenden Verfahrensablauf gemäß einer Ausführungsform der Erfindung; und
- Fig. 2: in einer schematischen perspektivischen Darstellung eine Personalisierungsanlage zur Durchführung des erfindungsgemäßen Verfahrens gemäß einer Ausführungsform der Erfindung.

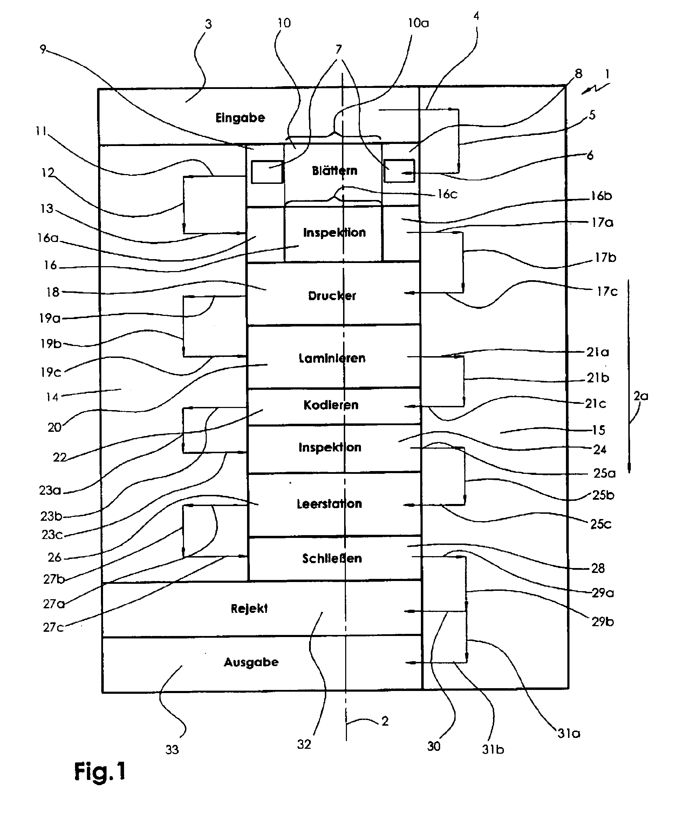

In Fig. 1 ist in einer Draufsicht ein vereinfachter Aufbau einer Personalisierungsanlage mit einem darin eingezeichneten Verfahrensablauf gemäß einer Ausführungsform der Erfindung gezeigt. Die Personalisierungsanlage 1 weist eine Längsachse 2 auf, wobei jedes Sicherheitsdokument oder jede Karte, wie Smartkarte, in Längsachsenrichtung 2a der Personalisierungsanlage diese Anlage - global betrachtet - durchläuft. Hierfür wird in einer Eingabestation 3 eine Vielzahl von Sicherheitsdokumenten oder Smartkarten angeordnet und in eine Richtung 4 mittels eines hier nicht näher dargestellten Shuttle-Systems, welches parallel zu der Längsachse 2 an der rechten Seite der Stationen hin- und herverschoben werden kann, aufgenommen.

Das Shuttle transportiert das Dokument entlang der Pfeilrichtung 5 von der Bearbeitungsstation 3 zu einer Bearbeitungsstation 10, indem das Dokument - wie durch einen Pfeil 6 dargestellt - einem Eingabebereich 8 der Bearbeitungsstation 10 zugeordnet wird. Hierfür weist der Eingabebereich 8 ein hier nicht näher dargestelltes Eingabeablageelement zur Ablage des Dokumentes 7 auf.

Nach Übergabe des Sicherheitsdokumentes aus dem Eingabebereich 8 an einen eigentlichen Bearbeitungsbereich 10a, in dem ein Umblättern des Dokumentes, wie beispielsweise ein Reisepass, durchgeführt wird, findet eine Ausgabe des Dokumentes an einen Ausgabebereich 9 mit einem hier nicht näher dargestellten Ausgabeablageelement statt.

Sowohl in dem Eingabebereich 8 als auch in dem Ausgabebereich 9 können Sicherheitsdokumente 7 abgelegt sein, während ein Umblättervorgang, wie er in dieser Bearbeitungsstation innerhalb des Bearbeitungsbereiches 10a stattfindet, durchgeführt wird.

Nach Bearbeitung des Sicherheitsdokumentes innerhalb der Bearbeitungsstation 10 wird das Sicherheitsdokument 7 aus dem Ausgabebereich 9 mittels eines weiteren Shuttles, welcher in einem Bereich 14 parallel zur Längsachse 2 verschiebbar und hier nicht näher dargestellt angeordnet ist, entnommen, um einen Abschnitt entlang der Längsachse verschoben und anschließend in einem Eingabebereich 16a einer weiteren Bearbeitungsstation 16, in welcher eine Inspektion an dem Sicherheitsdokument durchgeführt wird, zugeführt. Dieser Transportvorgang wird durch Pfeile 11, 12 und 13 wiedergegeben.

Nach Durchlauf des Eingabebereiches 16a, Durchführung des eigentlichen Inspektionsvorganges in einem Inspektionsbereich 16c und Durchlauf eines Ausgabebereiches 16b wird das Dokument wiederum entlang von Pfeilen 17a, 17b und 17c mittels des in einem Bereich 15 verschiebbaren Shuttles entnommen, entlang der Längsachse 2 weitertransportiert und einer druckenden Bearbeitungsstation 18 zugeführt. Diese und die nachfolgenden Bearbeitungsstationen können ebenso Eingabe- und Ausgabebereiche aufweisen, welche hier nicht näher dargestellt sind.

Anschließend findet wiederum eine linksseitige Entnahme, ein Weitertransport und eine linksseitige Zuführung gemäß Pfeilen 19a - 19c statt. Nun wird in einer Bearbeitungsstation 20 ein Laminiervorgang durchgeführt, um anschließend eine rechtsseitige Entnahme, einen Weitertransport und eine rechtsseitige Zuführung gemäß Pfeilen 21 a - 21 c zu einer Bearbeitungsstation 22 durchzuführen. In dieser Bearbeitungsstation 22 findet ein Kodiervorgang an beispielsweise einem Chip des Sicherheitsdokumentes statt.

Anschließend wird gemäß Pfeilen 23a - 23c wiederum eine linksseitige Entnahme, ein Weitertransport und eine linksseitige Zuführung zu einer Inspektionsstation 24, in welcher eine Inspektion der kodierten Daten stattfindet, durchgeführt.

Gemäß Pfeilen 25a - 25c findet dann rechtsseitig das Weitergeben des Dokumentes an eine Leerstation 26 und nun eine Weitergabe gemäß Pfeilen 27a - 27e an eine Schließstation 28, in welcher das Reisepassdokument geschlossen wird, statt.

Nach Entnahme des geschlossenen Reisepassdokumentes aus der Bearbeitungsstation 28 entlang eines Pfeils 29a und einem Weitertransport gemäß Pfeil 29b wird entschieden, ob ein wunschgemäß personalisiertes Dokument vorliegt oder nicht. Das wunschgemäß personalisierte Dokument wird gemäß Pfeilen 31a und 31b an eine Ausgabestation 33 gegeben. Das nicht wunschgemäß personalisierte Dokument wird gemäß Pfeil 30 an eine Rejekt-Station 32 ausgegeben.

Bei Gesamtbetrachtung der in Fig. 1 wiedergegebenen Darstellung wird deutlich, dass die Dokumente die einzelnen Bearbeitungsstationen aufeinanderfolgend in immer entgegengesetzter Richtung durchlaufen, wobei jeder Verlauf dieser Richtungen senkrecht zu dem Verlauf der Längsachse 2 vorzugsweise innerhalb einer gemeinsamen Ebene ausgerichtet ist.

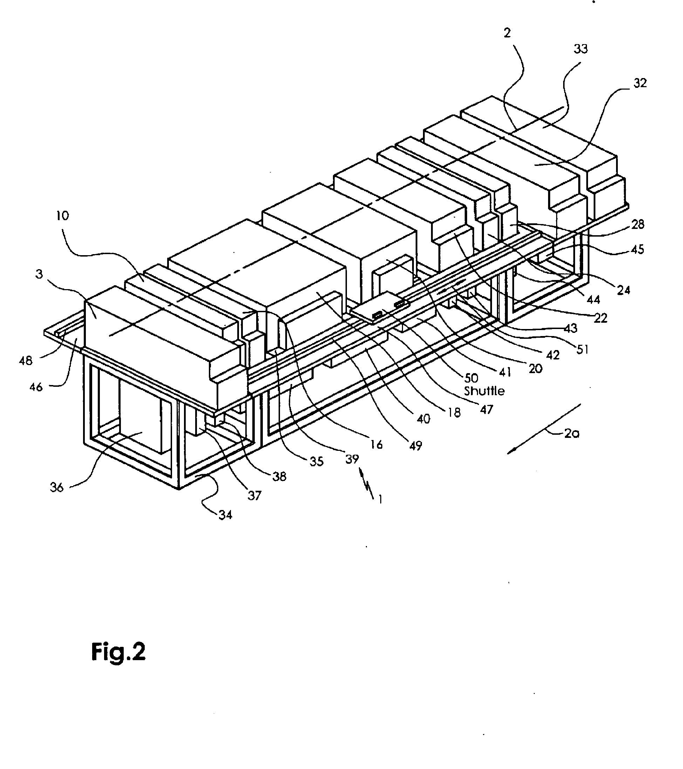

In Fig. 2 wird in einer perspektivischen einfachen Darstellung eine Personalisierungsanlage zur Durchführung des erfindungsgemäßen Verfahrens gemäß einer Ausführungsform der Erfindung gezeigt. Die Personalisierungsanlage 1 weist wiederum die Bearbeitungsstationen 3, 10, 16, 18, 20, 22, 24, 28, 32 und 33 oberhalb einer gemeinsamen Tischplatte 35, die auf einem gemeinsamen Anlagengestell bzw. Tischgestell 34 angeordnet ist, auf. Die Bearbeitungsstationen 3 als Eingabestation und 32, 33 als Ausgabe- und Rejekt-Station sind keine Bearbeitungsstationen im Sinne der restlichen Bearbeitungsstationen, da hier keine eigentliche Bearbeitung an dem Dokument selber stattfindet.

Dieser Darstellung ist deutlich zu entnehmen, dass die Bearbeitungsstationen mit ihrer Durchlaufrichtung quer zu der Längsachse 2 ausgerichtet sind und mittels eines Shuttle-Systems, welches auf beiden Seiten der eigentlichen Bearbeitungsstationen 10, 16, 18, 20, 22, 24 und 28 angeordnet ist, miteinander verbunden sind. Das Shuttle-System zeichnet sich durch ein Schienensystem 46, 47, 48 und 49 und darauf angeordneten Shuttles 50, die entlang der Längsachsenrichtung 2a verschiebbar sind, wie es durch einen Doppelpfeil 51 angedeutet wird, aus.

Sämtliche Bearbeitungsstationen weisen vorteilhaft unterhalb der Tischplatte Untermodule 36, 37, 38, 39, 40, 41, 42, 43, 44 und 45 auf, in welchen in der Regel elektronische Steuerungen und gegebenenfalls zumindest teilweise eine Steuereinheit zur Steuerung der Shuttlebewegungen in Abhängigkeit von einem bestimmten gewünschten Produktionsablauf untergebracht sind.

Der Shuttle 50 ist vorzugsweise so ausgebildet, dass er Dokumente bzw. Karten von den Ausgabebereichen der Bearbeitungsstationen mittels einer Schwenkbewegung oder mittels eines hier nicht näher dargestellten Schieber entnehmen und einem Eingabebereich einer weiteren Bearbeitungsstation ebenso mittels einer Schwenkbewegung oder eines nicht näher dargestellten Schiebers zuführen kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Personalisierungsanlage
- 2: Längsachse
- 2a: Längsachsenrichtung
- 3: Eingabestation
- 4, 13, 17a, 19c, 21a, 23c, 25a, 27c, 29a: zweite Richtung
- 6, 11, 17c, 19a, 21 c, 23a, 25c, 27a, 30, 31b: erste Richtung
- 5, 12, 17b, 19b 21 b, 23b, 25b, 27b, 29b, 31 a: Shuttle-Transportrichtung
- 7: Sicherheitsdokumente
- 8: Eingabebereich
- 9: Ausgabebereich
- 10: Umblätterstation
- 10a: Bearbeitungsbereich
- 14, 15: Shuttlebereiche
- 16: Inspektionsstation
- 16a: Eingabebereich
- 16b: Ausgabebereich
- 16c: Bearbeitungsbereich
- 18: Druckerstation
- 20: Laminierstation
- 22: Kodierstation
- 24: Inspektionsstation
- 26: Leerstation
- 28: Schließstation
- 32: Rejektstation
- 33: Ausgabestation
- 34: Anlagengestell
- 35: Tischplatte
- 36 - 45: Untermodule
- 46, 47: Blattform für Shuttleschienensystem
- 48, 49: Schiene für Schuttleschienensystem
- 50: Shuttle
- 51: Verschieberichtung

## Patentansprüche

1. Verfahren zum Personalisieren einer Vielzahl von Sicherheitsdokumenten (7), werthaltigen Dokumenten oder Smartkarten innerhalb einer Personalisierungsanlage (1), die eine Mehrzahl von entlang einer Längsachse (2) der Personalisierungsanlage (1) hintereinander angeordneten Bearbeitungsstationen (3, 10, 16, 18, 20, 22, 24, 26, 28, 32, 33) zur Durchführung einzelner Personalisierungsschritte umfasst,
**dadurch gekennzeichnet, dass**
die Dokumente (7) bzw. Smartkarten zur Durchführung der Personalisierungsschritte die eine Bearbeitungsstation (10, 18, 22, 26) in einer quer zur Längsachse (2) verlaufenden ersten Richtung (6, 11; 17c, 19a; 21 c, 23a; 25c, 27a; 30; 31 b) und die weitere Bearbeitungsstation (16, 20, 24, 28) in einer ebenso quer zur Längsachse (2) verlaufenden, zur ersten Richtung entgegengesetzten zweiten Richtung (4; 13, 17a; 19c, 21 a; 23c, 25a; 27c, 29a) durchlaufen, wobei sämtliche Bearbeitungsstationen (3, 10, 16, 18, 20, 22, 24, 26, 28, 32, 33) hinsichtlich ihrer Durchlaufrichtungen (4; 6, 11; 13, 17a; 17c; 19a; 19c, 21a; 21c, 23a; 23c, 25a; 25c, 27a; 27c, 29a; 30; 31b) quer zur Längsachse (2) ausgerichtet sind.

2. Verfahren nach Anspruch 1,
**dadurch gekennzeichnet, dass**
die Dokumente (7) bzw. Smartkarten mittels in Längsachsenrichtung (2a; 5, 12, 17b, 19b, 21 b, 23b, 25b, 27b, 29b, 31 a) der Personalisierungsanlage (1) bewegbare Transportelemente (50) von einem Ausgabebereich (9) der einen Bearbeitungsstation (10) zu einem Eingabebereich (16a) der anderen Bearbeitungsstation (16) transportiert werden.

3. Verfahren nach Anspruch 1 oder 2,
**dadurch gekennzeichnet, dass**
die Dokumente (7) bzw. Smartkarten die von ihnen zu durchlaufenden, hintereinander angeordneten Bearbeitungsstationen (3, 10, 16, 18, 20, 22, 24, 26, 28, 32, 33) abwechselnd in erster und zweiter Richtung (6, 11, 17c, 19a, 21 c, 23a, 25c, 27a, 30, 31b; 4, 13, 17a, 19c, 21 a, 23c, 25a, 27c, 29a) durchlaufen.

4. Verfahren nach Anspruch 2 oder 3,
**dadurch gekennzeichnet, dass**
die von den Dokumenten (7) bzw. Smartkarten zu durchlaufenden Bearbeitungsstationen (3, 10, 16, 18, 20, 22, 24, 26, 28, 32, 33) mittels einer Steuereinheit vorausgewählt werden und die Transportelemente (50) die ausgewählten Bearbeitungsstationen (3, 10, 16, 18, 20, 22, 24, 26, 28, 32, 33) in einer vorbestimmten Reihenfolge zum Eingeben oder Ausgeben der Dokumente (7) bzw. Smartkarten in oder von den Bearbeitungsstationen (3, 10, 16, 18, 20, 22, 24, 26, 28, 32, 33) anfahren.

5. Verfahren nach einem der Ansprüche 2 - 4,
**dadurch gekennzeichnet, dass**
jede(s) Dokument (7) bzw. Smartkarte im Eingabebereich (8, 16a) einer Bearbeitungsstation (10, 16) auf einem Eingabeablageelement und im Ausgabebereich (9, 16b) einer Bearbeitungsstation (10, 16) auf einem Ausgabeablageelement abgelegt wird, wobei das Eingabeablageelement und das Ausgabeablageelement außerhalb eines Bearbeitungsbereichs (10a, 16c) der Bearbeitungsstation (10, 16) liegen.

6. Verfahren nach Anspruch 5,
**dadurch gekennzeichnet, dass**
jeweils ein Dokument (7) bzw. eine Smartkarte auf dem Eingabeablageelement und dem Ausgabeablageelement abgelegt werden, während ein/eine weiteres/weitere Dokument bzw. Smartkarte im Bearbeitungsbereich (10a, 16c) der Bearbeitungsstation (10, 16) bearbeitet wird.

7. Personalisierungsanlage zum Personalisieren einer Vielzahl von Sicherheitsdokumenten (7), werthaltigen Dokumenten oder Smartkarten, mit einer Mehrzahl von entlang einer Längsachse (2) der Personalisierungsanlage (1) hintereinander angeordneten Bearbeitungsstationen (3, 10, 16, 18, 20, 22, 24, 26, 28, 32, 33), mit welchen einzelne Personalisierungsschritte an den Dokumenten (7) bzw. Smartkarten durchführbar sind,
**dadurch gekennzeichnet, dass**
jede Bearbeitungsstation (3, 10, 16, 18, 20, 22, 24, 26, 28, 32, 33) hinsichtlich ihrer Durchlaufrichtung (4; 6, 11; 13, 17a; 17c; 19a; 19c, 21 a; 21 c, 23a; 23c, 25a; 25c, 27a; 27c, 29a; 30; 31 b) für die Dokumente (7) bzw. Smartkarten quer zur Längsachse (2) ausgerichtet ist.

8. Personalisierungsanlage nach Anspruch 7,
**dadurch gekennzeichnet, dass**
erste Enden der Bearbeitungsstationen (3, 10, 16, 18, 20, 22, 24, 26, 28, 32, 33) mittels mindestens einem ersten parallel zur Längsachse (2) bewegbaren Transportelement (50) und zweite Enden der Bearbeitungsstationen (3, 10, 16, 18, 20, 22, 24, 26, 28, 32, 33) mittels mindestens einem zweiten parallel zur Längsachse (2) bewegbaren Transportelement verbunden sind.

9. Personalisierungsanlage nach Anspruch 8,
**dadurch gekennzeichnet, dass**
das bewegliche Transportelement ein verschiebbares Ablageelement (50) ist.

10. Personalisierungsanlage nach Anspruch 8 oder 9,
**dadurch gekennzeichnet, dass**
die ersten und zweiten Enden Eingabe- und Ausgabebereiche (8, 16a; 9, 16b) der Bearbeitungsstationen (10, 16) aufweisen, in denen Eingabe- und Ausgabeablageelemente zum Ablegen der Dokumente (7) bzw. Smartkarten außerhalb eines dazwischenliegendem Bearbeitungsbereiches (10a, 16c) der Bearbeitungsstationen (10, 16) angeordnet sind.

## Claims

1. Method for personalising a large number of security documents (7), documents of value or smart cards within a personalisation installation (1) which comprises a plurality of processing stations (3 , 10, 16, 18 , 20, 22, 24, 26, 28, 32, 33) arranged one behind the other along a longitudinal axis (2) of the personalisation installation (1) for carrying out individual personalisation steps, **characterised in that**:
in order to carry out the personalisation steps the documents (7) or smart cards run through one processing station (10, 18, 22, 26) in a first direction (6, 11; 17c, 19a; 2lc, 23a; 25c, 27a; 30; 3lb) running transversely to the longitudinal axis (2) and the other processing station (16, 20, 24, 28) in a second direction (4; 13, 17a; l9c, 21a; 23c, 25a; 27c, 29a) which is opposite to the first direction and likewise runs transversely to the longitudinal axis (2), wherein all the processing stations (3, 10, 16, 18, 20, 22, 24, 26, 28 , 32, 33) are oriented with their run through directions (4; 6, 11; 13, 17a; 17c; 19a; 19c, 21a; 21c, 23a; 23c, 25a; 25c, 27a; 27c, 29a; 30; 31b) transverse to the longitudinal axis (2).

2. Method according to claim 1, **characterised in that** the documents (7) or smart cards are transported from an output area (9) of one processing station (10) to an input area (16a) of the other processing station (16) by means of transport elements (50) which can move in the longitudinal axis direction (2a; 5, 12, 17b, l9b, 2lb, 23b, 25b, 27b, 29b, 31a) of the personalization installation (1).

3. Method according to claim 1 or 2, **characterised in that** the documents (7) or smart cards run through the processing stations (3, 10, 16, 18, 20, 22, 24, 26, 28, 32, 33) arranged one behind the other that are to be run through by said documents alternately in a first and second direction (6, 11, 17c, 19a, 21c, 23a, 25c, 27a, 30, 31b; 4, 13, 17a, 19c, 218., 23c, 25a, 27c, 29a).

4. Method according to claim 2 or 3, **characterised in that** the processing stations (3, 10, 16, 18, 20, 22, 24, 26, 28, 32, 33) that are to be run through by the documents (7) or smart cards are pre-selected by means of a control unit, and the transport elements (50) move to the selected processing stations (3, 10, 16, 18, 20, 22, 24, 26, 28, 32, 33) in a predefined order in order to input or output the documents (7) or smart cards into or from the processing stations (3, 10, 16, 18, 20, 22, 24, 26, 28, 32, 33).

5. Method according to one of claims 2 to 4, **characterised in that** each document (7) or smart card is deposited on an input tray element in the input area (8, 16a) of a processing station (10, 16) and is deposited on an output tray element in the output area (9, 16b) of a processing station (10, 16), wherein the input tray element and the output tray element are located outside a processing area (10a, l6c) of the processing station (10, 16).

6. Method according to claim 5, **characterised in that** in each case one document (7) or smart card is deposited on the input tray element and on the output tray element while a further document or smart card is being processed in the processing area (10a, 16c) of the processing station (10, 16).

7. Personalisation installation for personalising a large number of security documents (7), documents of value or smart Cards , comprising a plurality of processing stations (3, 10, 16, 18, 20, 22, 24, 26, 28, 32 , 33) arranged one behind the other along a longitudinal axis (2) of the personalisation installation (1), by means of which processing stations individual personalisation steps can be carried out on the documents (7) or smart cards, **characterised in that**:
each processing station (3, 10, 16, 18, 20, 22, 24, 26, 28, 32, 33) is oriented with its run-through direction (4; 6 , 11; 13 , 17a; 17c; 19a; l9c, 21a; 21c, 23a; 23c, 25a; 25c, 27a; 27c, 29a; 30; 31b) for the documents (7) or smart cards transverse to the longitudinal axis (2).

8. Personalisation installation according to claim 7, **characterised in that** first ends of the processing stations (3 , 10, 16, 18 , 20, 22, 24, 26, 28, 32 , 33) are connected by means of at least one first transport element (50) which can move parallel to the longitudinal axis (2) and second ends of the processing stations (3, 10, 16, 18, 20, 22, 24, 26, 28, 32, 33) are connected by means of at least one second transport element which can move parallel to the longitudinal axis (2).

9. Personalisation installation according to claim 8, **characterised in that** the movable transport element is a displaceable tray element (50).

10. Personalisation installation according to claim 8 or 9, **characterised in that** the first and second ends comprise input and output areas (8 , 16a; 9, 16b) of the processing stations (10, 16), in which input and output tray elements for depositing the documents (7) or smart cards are arranged outside an intermediate processing area (10a, 16c) of the processing stations (10, 16).

## Revendications

1. Procédé pour personnaliser une pluraité de documents de sécurité (7), de documents de valeur ou de cartes Smart dans une installation de personnalisation (1) qui comprend plusieurs postes de traitement (3, 10, 16, 18, 20, 22, 24, 26, 28, 32, 33) agencés les uns après les autres le long d'un axe longitudinal (2) de l'installation de personnalisation (1), pour effectuer des étapes de personnalisation individuelles,
**caractérisé en ce que** pour effectuer les étapes de personnalisation, les documents (7), respectivement les cartes Smart, traversent un poste de traitement (10, 18, 22, 26) dans une première direction (6, 11; 17c, 19a; 21c, 23a; 25c, 27a; 30; 31b) s'étendant transversalement à l'axe longitudinal (2), et l'autre poste de traitement (16, 20, 24, 28) dans une deuxième direction (4; 13, 17a; 19c, 21a; 23c, 25a; 27c, 29a) s'étendant également transversalement à l'axe longitudinal (2), mais opposée à ladite première direction, tous les postes de traitement (3, 10, 16, 18, 20, 22, 24, 26, 28, 32, 33) étant, quant à leurs directions de passage (4; 6, 11; 13, 17a; 17c; 19a; 19c, 21a; 21c, 23a; 23c, 25a; 25c, 27a; 27c, 29a; 30; 31b), orientés transversalement à l'axe longitudinal (2).

2. Procédé selon la revendication 1,
**caractérisé en ce que** les documents (7), respectivement les cartes Smart, sont transporté(e)s d'une zone de sortie (9) d'un poste de traitement (10) à une zone d'introduction (16a) de l'autre poste de traitement (16), au moyen d'éléments de transport (50) pouvant se déplacer dans la direction d'axe longitudinal (2a; 5, 12, 17b, 19b, 21b, 23b, 25b, 27b, 29b, 31a) de l'installation de personnalisation (1).

3. Procédé selon la revendication 1 ou la revendication 2,
**caractérisé en ce que** les documents (7), respectivement les cartes Smart, traversent alternativement dans la première et la deuxième direction (6, 11, 17c, 19a, 21c, 23a, 25c, 27a, 30, 31b; 4, 13, 17a, 19c, 21a, 23c, 25a, 27c, 29a), les postes de traitement (3, 10, 16, 18, 20, 22, 24, 26, 28, 32, 33) qu'ils doivent traverser et qui sont agencés les uns après les autres,.

4. Procédé selon la revendication 2 ou la revendication 3,
**caractérisé en ce que** les postes de traitement (3, 10, 16, 18, 20, 22, 24, 26, 28, 32, 33) devant être traversés par les documents (7), respectivement les cartes Smart, sont présélectionnés à l'aide d'une unité de commande, et les éléments de transport (50) sont dirigés vers les postes de traitement (3, 10, 16, 18, 20, 22, 24, 26, 28, 32, 33) sélectionnés, selon un ordre prédéterminé, pour l'introduction des documents (7), respectivement des cartes Smart, dans les postes de traitement (3, 10, 16, 18, 20, 22, 24, 26, 28, 32, 33) ou leur sortie dedits postes de traitement.

5. Procédé selon l'une des revendications 2 - 4,
**caractérisé en ce que** chaque document (7), respectivement chaque carte Smart, est déposé(e), dans la zone d'introduction (8, 16a) d'un poste de traitement (10, 16), sur un élément de dépôt d'introduction, et, dans la zone de sortie (9, 16b) d'un poste de traitement (10, 16), sur un élément de dépôt de sortie, l'élément de dépôt d'introduction et l'élément de dépôt de sortie se situant à l'extérieur d'une zone de traitement (10a, 16c) du poste de traitement (10, 16).

6. Procédé selon la revendication 5,
**caractérisé en ce qu'**un document (7), respectivement une carte Smart, est déposé(e) sur l'élément de dépôt d'introduction et sur l'élément de dépôt de sortie, pendant qu'un autre document, respectivement une autre carte Smart, est traité(e) dans la zone de traitement (10a, 16c) du poste de traitement (10, 16).

7. Installation de personnalisation pour personnaliser une pluralité de documents de sécurité (7), de documents de valeur ou de cartes Smart, comprenant plusieurs postes de traitement (3, 10, 16, 18, 20, 22, 24, 26, 28, 32, 33) agencés les uns après les autres le long d'un axe longitudinal (2) de l'installation de personnalisation (1), à l'aide desquels des étapes de personnalisation individuelles peuvent être effectuées sur les documents (7), respectivement les cartes Smart,
**caractérisée en ce que** chaque poste de traitement (3, 10, 16, 18, 20, 22, 24, 26, 28, 32, 33) est orienté, quant à sa direction de passage (4; 6, 11; 13, 17a; 17c; 19a; 19c, 21a; 21c, 23a; 23c, 25a; 25c, 27a; 27c, 29a; 30; 31b) pour les documents (7), respectivement les cartes Smart, transversalement à l'axe longitudinal (2).

8. Installation de personnalisation selon la revendication 7,
**caractérisée en ce que** des premières extrémités des postes de traitement (3, 10, 16, 18, 20, 22, 24, 26, 28, 32, 33) sont reliées au moyen d'au moins un premier élément de transport (50) pouvant être déplacé parallèlement à l'axe longitudinal (2), et des deuxièmes extrémités des postes de traitement (3, 10, 16, 18, 20, 22, 24, 26, 28, 32, 33) sont reliées au moyen d'au moins un deuxième élément de transport pouvant être déplacé parallèlement à l'axe longitudinal (2).

9. Installation de personnalisation selon la revendication 8,
**caractérisée en ce que** l'élément de transport déplaçable est un élément de dépôt (50) susceptible d'être décalé.

10. Installation de personnalisation selon la revendication 8 ou la revendication 9,
**caractérisée en ce que** les premières et deuxièmes extrémités présentent des zones d'introduction et de sortie (8, 16a; 9, 16b) des postes de traitement (10, 16), dans lesquelles sont agencés des éléments de dépôt d'introduction et des éléments de dépôt de sortie pour déposer les documents (7), respectivement les cartes Smart, à l'extérieur d'une zone de traitement (10a, 16c) intermédiaire des postes de traitement (10, 16).
